# FASCICULE DE BREVET EUROPEEN

(11) **EP 1 685 613 B1**
(45) Date de publication et mention de la délivrance du brevet: **02.05.2007**
(21) Numéro de dépôt: 04805311.0
(22) Date de dépôt: 26.10.2004
(51) Int. Cl.: H01M 6/34, H01M 2/40, F42B 19/24

(54) **PILE ELECTRIQUE DE PROPULSION D'ENGIN EN MILIEU AQUATIQUE**
PROPULSIONSZELLE FÜR EINE EINRICHTUNG IN EINEM WÄSSRIGEN MEDIUM
PROPULSION CELL FOR A DEVICE IN AN AQUATIC MEDIUM

(30) Priorité: 17.11.2003 FR 0313434
(43) Date de publication de la demande: 02.08.2006
(73) Titulaire: DCN, 75015 Paris (FR)
(72) Inventeur: VIVIEN, Didier, F-83310 Cogolin (FR); CARMILLET, Jean-Pierre, F-83320 Ste Maxime (FR)
(74) Mandataire: Lagrange, Jacques Etienne M.M.
(86) Numéro de dépôt international: PCT/FR2004/002754
(87) Numéro de publication internationale: WO 2005/053068

(56) Documents cités:
- EP-A- 0 307 292
- FR-A- 2 716 750
- US-A- 4 710 438

## Description

L'invention concerne une pile électrique de propulsion d'engin en milieu aquatique.

La propulsion d'engins en milieu aquatique, notamment lorsque ces engins du type sous-marin évoluant, au moins momentanément en immersion, nécessite la fourniture d'une énergie de propulsion, telle qu'une énergie électrique, dans des conditions de puissance, de durée et de modulation par plages successives bien déterminées.

C'est en particulier le cas pour des engins sous-marins d'attaque, de riposte ou d'observation lancés à partir d'un autre engin porteur, tel qu'un sous-marin, de tels engins sous-marins lancés étant alors soumis à une étape ou phase de lancement, généralement brève, suivie d'une étape ou phase de croisière plus longue.

L'alimentation en énergie électrique de tels engins sous-marins lancés doit alors répondre à des critères très spécifiques de puissance électrique délivrée et de durée de délivrance de cette énergie, afin de permettre aux engins sous-marins lancés de remplir leur mission conformément à un programme pré-établi.

Dans ces conditions, l'utilisation de sources d'énergie électrique classiques, telles que les batteries d'accumulateurs au plomb, ne peut être retenue en raison, d'une part, de la puissance électrique demandée pour assurer une telle fonction et, d'autre part, de la masse inerte nécessaire à la mise en oeuvre de telles sources d'énergie électrique classiques.

Les sources d'énergie électrique connues de l'état de la technique de type piles thermiques permettent, de manière générale, de délivrer une puissance électrique importante. Elles nécessitent, toutefois, la fourniture d'une énergie thermique importante, afin de permettre la fourniture d'une puissance électrique en conséquence.

De telles sources ne peuvent, pour cette raison, être utilisées pendant des durées de mission d'engins aquatiques, notamment d'engins sous-marins, excédant quelques dizaines de secondes, en raison de la difficulté majeure rencontrée pour fournir une telle quantité d'énergie électrique au-delà d'une telle durée, à partir de sources thermiques embarquées sur de tels engins, lorsque, en particulier, ceux-ci sont immergés.

La présente invention a pour objet de remédier aux inconvénients des piles électriques ou sources d'énergie électrique traditionnelles, lesquelles ne peuvent prétendre à une utilisation immédiate dans le cadre des contraintes opérationnelles précédemment mentionnées.

En particulier, un objet de la présente invention est la mise en oeuvre d'une pile électrique de propulsion d'engin en milieu aquatique permettant de délivrer une puissance électrique nécessaire et suffisante pour assurer la propulsion de ce type d'engin selon une phase de lancement suivie d'une phase de croisière, sur des distances pouvant atteindre 10 à 20 kilomètres.

Un autre objet de la présente invention est, également, la mise en oeuvre d'une pile électrique de propulsion d'engin en milieu aquatique permettant de délivrer la puissance électrique précitée, pendant une durée de l'ordre de 30 à 45 minutes.

Un autre objet de la présente invention est, en outre, la mise en oeuvre d'une pile électrique de propulsion d'engin en milieu aquatique présentant une structure spécifique autorisant, d'une part, le stockage de cette pile électrique de propulsion inerte, en l'absence de toute activation, pendant une longue durée, de plusieurs mois par exemple, dans des conditions de sécurité optimales, puis l'intégration structurelle et/ou fonctionnelle de cette pile dans un engin, pour exploitation dans le cadre d'une mission opérationnelle, sur simple activation lors de l'immersion de la pile électrique de propulsion en milieu aquatique.

Un autre objet de la présente invention est, enfin, la mise en oeuvre d'une pile électrique de propulsion d'engin en milieu aquatique permettant l'exécution de missions à caractère non destructif, la pile électrique de propulsion, après retour de l'engin sur son site d'origine, pouvant non seulement être réutilisée, après reconditionnement, mais également stockée dans des conditions de sécurité et de fiabilité semblables à celles d'une première utilisation.

La pile électrique de propulsion d'engin en milieu aquatique, objet de la présente invention, est remarquable en ce qu'elle comporte au moins, dans un corps de pile étanche, une première chambre formant un logement comportant une pile électrique auxiliaire et un module de contrôle-commande de la pile électrique de propulsion, une deuxième chambre formant un logement comportant une pile électrique principale de type électrochimique, cette deuxième chambre étant munie d'organes d'admission contrôlée et de régulation d'un flux d'eau du milieu aquatique dans cette deuxième chambre, formant réservoir, pour former, suite à la commande d'admission de l'eau du milieu aquatique un électrolyte d'activation de cette pile électrique principale, et, une troisième chambre formant un logement comportant un module d'amorçage d'admission par aspiration de l'eau du milieu aquatique et de rejet par échappement d'effluents issus de la réaction chimique de la pile principale dans le milieu aquatique, à partir d'une vanne d'admission respectivement d'une vanne d'échappement montées dans cette troisième chambre, le module de contrôle-commande de la pile électrique de propulsion permettant l'actionnement de la pile électrique auxiliaire pour engendrer temporairement de l'énergie électrique pendant une étape de lancement de cet engin en milieu aquatique et l'amorçage de l'admission par aspiration de l'eau du milieu aquatique et de rejet par échappement d'effluents pour produire de l'énergie électrique à partir de la pile électrique principale pendant une phase de croisière.

La pile électrique de propulsion d'engin en milieu aquatique objet de la présente invention trouve application à la propulsion d'engins de tout type en milieu aquatique, tels que, notamment, torpille, engin ou sous-marin de reconnaissance ou d'exploration, engin de surface par exemple.

La présente invention sera mieux comprise à la lecture de la description et à l'observation des dessins ci-après dans lesquels :

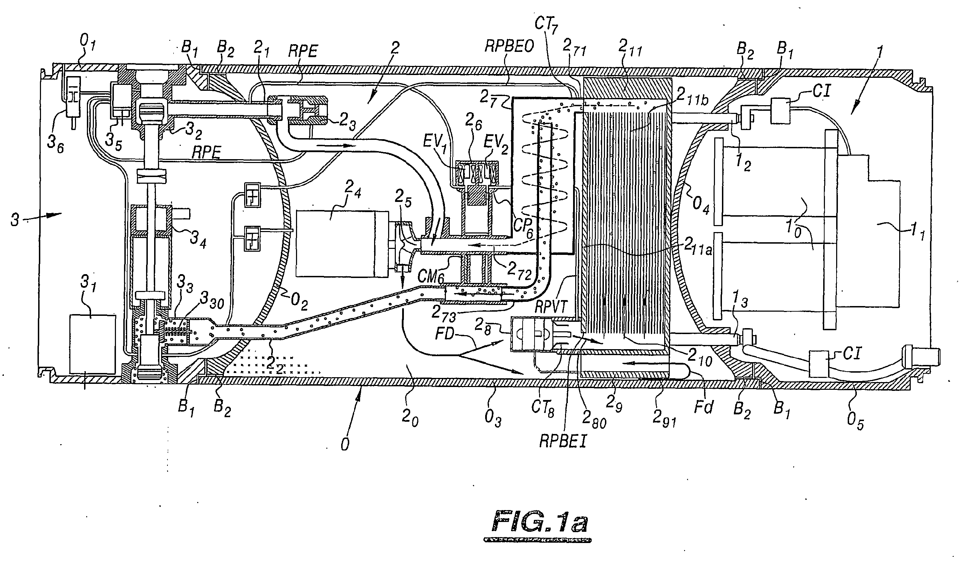

- la Figure 1a représente, à titre purement illustratif, une vue en coupe selon un plan longitudinal de symétrie de la pile électrique de propulsion d'engin en milieu aquatique, conforme à l'objet de la présente invention ;

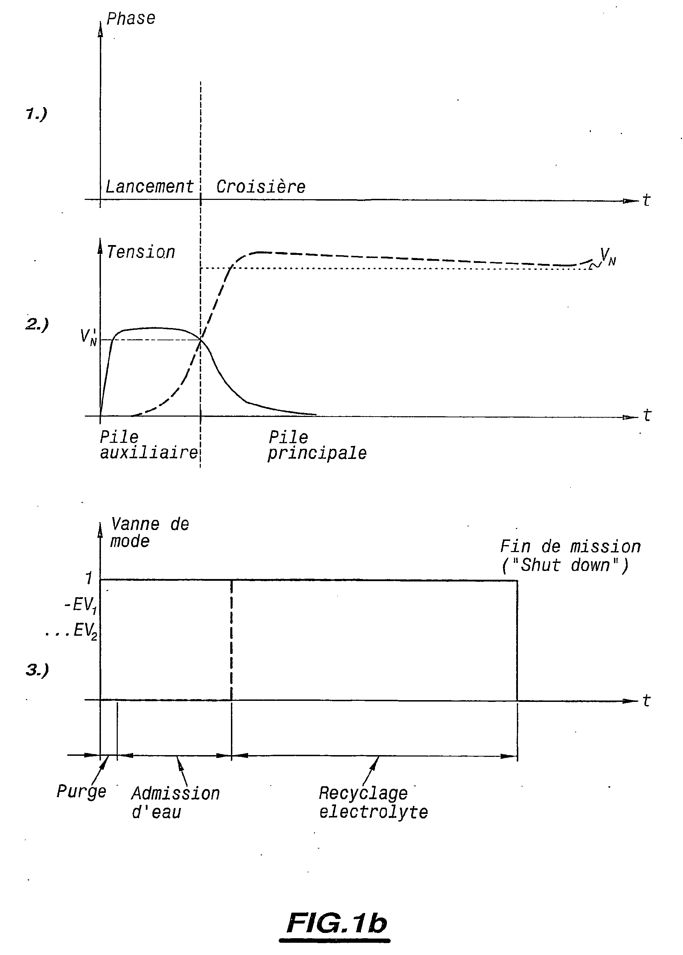

- la Figure 1b représente, à titre purement illustratif différents chronogrammes de signaux permettant de représenter un mode opératoire spécifique de la pile électrique de propulsion d'engin en milieu aquatique, objet de la présente invention.

Une description plus détaillée de la pile électrique de propulsion d'engin en milieu aquatique conforme à l'objet de la présente invention sera maintenant donnée en liaison avec la Figure 1a puis la Figure 1b.

Ainsi qu'on l'observera sur la Figure 1a précitée, la pile électrique objet de l'invention comporte dans au moins dans un corps de pile étanche, noté 0, une première chambre 1, une deuxième chambre 2 et une troisième chambre 3, chacune des chambres précitées formant un logement.

La première chambre 1 comporte une pile électrique auxiliaire notée 1₀ et un module de contrôle-commande de la pile électrique de propulsion, noté 1₁.

La deuxième chambre 2 comporte une pile électrique principale, notée 2₁₁, cette pile électrique principale étant de manière avantageuse de type électrochimique afin d'opérer dans les conditions qui seront explicitées ci-après.

La deuxième chambre 2 est en outre munie d'organes d'admission contrôlée et de régulation d'un flux d'eau du milieu aquatique dans la deuxième chambre 2, laquelle forme un réservoir, pour constituer suite à la commande d'admission de l'eau du milieu aquatique dans le réservoir précité un électrolyte d'activation, noté 2₀, lequel bien entendu a pour fonction d'activer la pile électrique principale 2₁₁.

Enfin, la troisième chambre 3 comporte un module d'amorçage d'admission par aspiration de l'eau du milieu aquatique et de rejet par échappement des effluents issus de la réaction chimique de la pile principale dans le milieu aquatique, les opérations d'admission par aspiration et de rejet par échappement des effluents étant effectuées à partir d'une vanne d'admission 3₂ respectivement d'une vanne d'échappement 3₃ montée dans la troisième chambre 3.

Le module d'amorçage porte la référence 3₄ sur la Figure 1a. Il permet d'assurer l'amorçage d'admission par aspiration de l'eau par l'intermédiaire de la vanne d'admission 3₂ respectivement la commande de rejet des fluents par la vanne d'échappement 3₃ ainsi qu'il sera décrit ultérieurement dans la description.

Selon un aspect particulièrement avantageux de la pile électrique de propulsion d'engin en milieu aquatique, objet de la présente invention, le module 1₁ de contrôle-commande de la pile électrique de propulsion situé dans la première chambre 1 permet l'actionnement de la pile électrique auxiliaire 1₀ pour engendrer temporairement de l'énergie électrique pendant une étape de lancement de l'engin en milieu aquatique et l'amorçage de l'admission par aspiration de l'eau du milieu aquatique et de rejet par échappement des effluents pour produire de l'énergie électrique à partir de la pile électrique principale 2₁₁ pendant une phase dite de croisière.

En référence à la Figure 1a, on indique que la pile électrique auxiliaire 1₀ et la pile électrique principale 2₁₁ sont commandées séquentiellement par le module de contrôle-commande de la pile électrique de propulsion 1₁ placée dans la première chambre 1 et connectées sur un réseau de distribution d'énergie électrique principal respectivement secondaire.

D'une manière générale, on indique que, à titre d'exemple non limitatif, la pile auxiliaire et la pile principale délivrent des tensions électriques de valeurs nominales V'_{N}, V_{N} sensiblement différentes et peuvent, pour cette raison, être connectées chacune sur un réseau de distribution d'énergie électrique principal respectivement secondaire, ces réseaux étant bien entendu protégés et isolés par des connexions à diodes par exemple. Ces connexions de type classique ne sont pas représentées aux dessins.

En outre, on indique que la pile électrique auxiliaire 1₀ est avantageusement formée par un ensemble d'éléments de piles thermiques amorcés par allumage pyrotechnique par exemple.

La pile auxiliaire 1₀ a pour objet de fournir l'alimentation électrique a l'engin se déplaçant en milieu aquatique pendant la phase de lancement notamment, c'est-à-dire en début de mission de l'engin précité, et pendant une phase d'éloignement du point de départ n'excédant pas quelques centaines de mètres.

La pile auxiliaire 1₀ fournit ainsi l'énergie au moteur de propulsion de l'engin se déplaçant en milieu aquatique sous puissance sensiblement réduite ainsi qu'à l'ensemble des organes de la pile électrique de propulsion d'engin en milieu aquatique, conformément à l'objet de la présente invention ainsi qu'il sera décrit ultérieurement dans la description.

Pour cette raison, la pile auxiliaire 1₀ peut être avantageusement formée par quatre piles thermiques connectées en deux branches parallèles de deux piles en séries, par exemple.

Les deux branches parallèles sont avantageusement isolées chacune par une diode vis-à-vis d'une tension inverse susceptible de provenir de la pile principale ou de l'autre branche en parallèle constituant la pile auxiliaire 1₀.

L'allumage de chacune des piles thermiques constitutives de la pile auxiliaire 1₀ est avantageusement réalisé par un double allumage pyrotechnique par l'intermédiaire d'un boîtier d'allumage non représenté aux dessins.

Dans un mode de mise en oeuvre préférentiel non limitatif, une première pile thermique est amorcée dès le lancement de l'engin se déplaçant en milieu aquatique à partir d'un signal délivré de manière externe par un système de lancement de l'engin se déplaçant en milieu aquatique par exemple.

Le signal précité, tel qu'un créneau de tension pendant une durée déterminée, peut alors permettre de charger une capacité électrique placée dans le boîtier d'allumage. La capacité est ensuite déchargée sur les allumeurs pyrotechniques de la pile thermique soumise en premier à l'opération d'allumage. Les trois autres piles thermiques constitutives de la pile auxiliaire 1₀ sont ensuite allumées par l'énergie électrique fournie par la première pile thermique soumise au processus d'allumage. Cette opération est possible dès que la première pile thermique allumée fournit une tension nominale suffisante.

Dans un mode de réalisation non limitatif, la durée de fonctionnement de la pile auxiliaire 1₀ n'excède pas trois secondes.

Dans un mode de réalisation non limitatif, la pile auxiliaire 1₀ permet de délivrer une tension maximale à vide de l'ordre de 250 V pour une puissance moyenne de 45 kW.

L'énergie électrique délivrée par la pile auxiliaire 1₀ est délivrée sur un réseau de distribution d'énergie électrique principal et sur un réseau secondaire, lequel bien entendu est raccordé de manière classique à l'engin destiné à être alimenté temporairement par la pile auxiliaire 1₀.

En ce qui concerne les organes d'admission contrôlée et de régulation d'un flux d'eau du milieu aquatique dans la deuxième chambre 2, ainsi que représenté sur la Figure 1a, on indique que ceux-ci comportent avantageusement un groupe motopompe, noté 2₄, dont la buse d'aspiration est reliée à la vanne d'admission de l'eau du milieu aquatique, vanne portant la référence 3₂ sur la Figure 1a, et dont la buse de sortie délivre l'eau du milieu aquatique aspirée directement dans la deuxième chambre 2 formant réservoir, de façon à former l'électrolyte d'activation et à immerger la pile électrique principale 2₁₁ dans l'électrolyte d'activation 2₀ précité.

Ainsi que représenté en outre à la Figure 1a, la buse d'aspiration 2₅ du groupe motopompe 2₄ est reliée à la vanne d'admission 3₂ par l'intermédiaire d'une tubulure 2₁.

La liaison entre la buse d'aspiration 2₅ et la vanne d'admission 3₂ de l'eau du milieu aquatique par la tubulure 2₁ peut être effectuée de manière directe ou par l'intermédiaire d'un régulateur de débit, portant la référence 2₃ sur la Figure 1a.

Le régulateur de débit précité 2₃ permet de réguler le débit d'admission de l'eau du milieu aquatique dans le réservoir formé par la chambre 2 dans un mode de réalisation préférentiel non limitatif, ainsi qu'il sera décrit ultérieurement dans la description.

En outre, les organes d'admission contrôlée de régulation d'un flux d'eau du milieu aquatique dans la deuxième chambre 2 comportent avantageusement, ainsi que représenté à la Figure 1a, une vanne thermostatique 2₈ reliée à la pile électrique principale 2₁₁. La vanne thermostatique 2₈ permet de réguler l'admission de l'électrolyte d'activation 2₀ dans la pile principale 2₁₁ pour amorcer l'activation de la pile électrique principale par réaction électrochimique, ainsi qu'il sera décrit ultérieurement dans la description.

Enfin, les organes d'admission contrôlée et de régulation d'un flux d'eau du milieu aquatique dans la deuxième chambre 2 comportent un dispositif de circulation de l'électrolyte d'activation et de séparation des effluents de ce dernier.

Ainsi que représenté de manière non limitative sur la Figure 1a, le dispositif de circulation de l'électrolyte d'activation et de séparation des effluents comporte avantageusement une buse d'entrée 2₇₁ reliée à la cavité interne de la pile électrique principale 2₁₁, cette dernière contenant, en régime établi, l'électrolyte d'activation, une première buse de sortie 2₇₂ reliée au voisinage de la buse 2₅ d'aspiration de la motopompe et une deuxième buse de sortie d'effluents 2₇₃ reliée à la vanne de rejet 3₃ placée dans la troisième chambre 3 par l'intermédiaire d'une tubulure 2₂.

En outre, ainsi que représenté de manière non limitative sur la Figure 1a, la deuxième buse de sortie 2₇₃ du dispositif de circulation et de séparation est reliée à la vanne de rejet 3₃ d'effluents disposée dans la troisième chambre 3 par l'intermédiaire d'une vanne de mode, notée 2₆, laquelle permet d'orienter, dans une première position, les effluents vers la vanne de rejet d'effluents 3₃, lors de l'amorçage de la pile électrique principale pendant la phase de lancement, respectivement, dans une deuxième position, l'électrolyte d'activation vers la buse d'aspiration 2₅ de la motopompe, de manière à engendrer une circulation en boucle fermée de l'électrolyte d'activation 2₀ dans la pile électrique principale pendant la phase de croisière.

Enfin, on indique que la vanne thermostatique 2₈ est avantageusement formée par une vanne à trois voies recevant au moins sur l'une des voies un flux direct FD d'électrolyte d'activation 2₀ puisé dans la deuxième chambre 2 formant réservoir et sur une deuxième voie un flux dérivé d'électrolyte d'activation transitant par un échangeur de chaleur 2₉, le flux Fd dérivé d'électrolyte d'activation précité étant maintenu à température sensiblement constante par l'échangeur de chaleur.

La vanne thermostatique 2₈ délivre sur une troisième voie à partir du flux direct et du flux dérivé à température sensiblement constante servant de température de consigne un flux d'électrolyte d'activation thermostaté noté 2₁₀ à température sensiblement constante à la cavité interne de la pile électrique principale 2₁₁.

Le mode opératoire des organes d'admission contrôlée de régulation d'un flux d'eau du milieu aquatique dans la deuxième chambre et en particulier le dispositif de circulation et de séparation de l'électrolyte d'activation et des effluents opèrent de la manière ci-après :
- l'ensemble des éléments constitutifs des organes précités est essentiellement destiné à réguler l'équilibre thermique de la pile principale 2₁₁ et bien entendu à évacuer les effluents. Cette régulation est réalisée par la circulation de l'électrolyte d'activation de la pile principale dont le fonctionnement est le suivant :

- le groupe motopompe 2₄ pressurise le réservoir, c'est-à-dire l'ensemble de la deuxième chambre 2 dans lequel est stocké l'électrolyte.

La circulation de l'électrolyte d'activation s'installe alors par l'intermédiaire de la vanne thermostatique 2₈, laquelle grâce à son circuit à trois voies permet de mélanger le débit direct FD venant du réservoir formé par la chambre 2 et le débit dérivé Fd passant par l'échangeur de chaleur 2₉.

Le mélange d'électrolyte résultant, flux d'électrolyte d'activation 2₁₀, est alors à température sensiblement constante grâce au fonctionnement de la vanne thermostatique 2₈, laquelle permet de maintenir la température de consigne donnée par le flux dérivé Fd traversant l'échangeur de chaleur 2₉ en ajustant les flux entrants.

Le flux d'électrolyte d'activation 2₁₀ est alors délivré aux organes internes de la pile principale 2₁₁ de type électrochimique de façon à irriguer les organes internes de celle-ci avec un débit commandé par le groupe motopompe 2₄.

D'une manière spécifique, on indique que la pile principale 2₁₁ est avantageusement constituée d'un empilement de couples électrochimiques irrigués par le flux d'électrolyte d'activation thermostaté 2₁₀ pour provoquer la réaction chimique de la pile permettant d'engendrer l'énergie électrique correspondante.

En sortie de la pile principale 2₁₁, l'électrolyte d'activation est collecté pour être acheminé par la buse d'entrée 2₇₁ du séparateur d'effluents 2₇.

Le séparateur d'effluents peut avantageusement être constitué par un séparateur de gaz basé sur le principe de la centrifugation, en fonction du type de réaction électrochimique mis en jeu dans la pile principale 2₁₁.

Le séparateur de gaz sépare ainsi deux phases, une première phase liquide correspondant à l'électrolyte d'activation recyclé renvoyé vers le groupe motopompe 2₄ par l'intermédiaire de la vanne de mode 2₆ et une deuxième phase gazeuse, laquelle est rejetée vers le milieu aquatique par l'intermédiaire de la tubulure 2₂ et de la vanne de rejet d'effluents 3₃.

On comprend ainsi que la vanne de mode 2₆ a pour fonction de commuter le flux d'électrolyte d'activation recyclé, soit vers le groupe motopompe 2₄ lors d'un fonctionnement en circuit fermé de l'ensemble au cours de la phase de croisière, soit le cas échéant vers une évacuation vers le milieu aquatique en fin de mission par exemple, en particulier lors d'une mission à caractère non destructif, par l'intermédiaire de la vanne de rejet 3₃.

On comprend bien sûr que la vanne de mode 2₆ est pilotée par le module de contrôle-commande 1₁ de la pile électrique de propulsion, ainsi qu'il sera décrit de manière plus détaillée ultérieurement dans la description.

Un mode de mise en oeuvre préférentiel non limitatif de l'ensemble de la pile électrique de propulsion d'engin en milieu aquatique, objet de la présente invention, sera maintenant donné en liaison avec la Figure 1a et la Figure 1b lorsque la pile électrique principale de type électrochimique est une pile AgO-Al.

Dans les conditions précitées, la pile électrique de propulsion comprend une pile électrique principale 2₁₁ de type électrochimique formée par un bloc électrochimique constitué par un empilement de couples électrochimiques AgO-Al placés dans la cavité d'un module de coque étanche 2₁₁ₐ. Le module étanche précité comprend par exemple une pluralité de couples électrochimiques 2_{11b} connectés en parallèle permettant, bien entendu, la circulation du flux d'électrolyte d'activation thermostaté 2₁₀.

Ainsi qu'on l'a représenté sur la Figure 1a, le module étanche est relié d'une part à la vanne thermostatique 2₈ à la base du module étanche 2₁₁ₐ et d'autre part au dispositif de circulation de l'électrolyte et de séparation d'effluents 2₇, à la buse d'entrée de ce dernier 2₇₁.

La pile électrique principale de type électrochimique est formée en outre par une réserve de soude anhydre, le bloc électrochimique et la soude anhydre étant placés dans la deuxième chambre 2 formant réservoir. Sur la Figure 1a, on a représenté la réserve de soude anhydre par des cristaux représentés par des croix non entièrement dilués dans l'eau du milieu aquatique admise dans la chambre 2.

Sur admission de l'eau du milieu aquatique, l'amorçage de l'activation de la pile électrique principale met en jeu, à partir des couples électrochimiques AgO-Al, de la soude anhydre et de l'eau, une réaction électrochimique principale :

2 Al + 3 AgO + 2 NaOH + 3 H₂O → 3 Ag + 2 NaAl(OH)₄ + 2 kCal,

une réaction de corrosion parasite :

2 Al + 2 NaOH + 2 H₂O → 2 NaAlO2 + 3 H2 + 200 kCal,

Dans ces conditions de réaction électrochimique, les effluents sont formés par le gaz hydrogène H₂.

De manière non limitative, on indique que la réserve de soude anhydre est avantageusement constituée par un mélange de microperles de soude anhydre et de stannates en poudre chargés en vrac dans la deuxième chambre formant réservoir.

Le mode opératoire de l'ensemble sera maintenant décrit compte tenu de la mise en oeuvre avantageuse, mais non indispensable, du régulateur de débit 2₃.

Lors de l'activation de la pile, c'est-à-dire lors de l'amorçage de l'ouverture de la vanne d'admission 3₂, après la phase de lancement de l'engin, la vanne d'admission 3₂ et le régulateur de débit d'admission d'eau du milieu aquatique 2₃, permettent l'entrée de l'eau du milieu aquatique vers le réservoir formé par la deuxième chambre 2.

Ceci provoque par dissolution la formation de l'électrolyte d'activation. Le régulateur de débit 2₃ intervient de façon à contrôler le débit d'eau entrant, quelque soit l'immersion d'activation de l'engin et bien entendu de la pile de propulsion d'engin en milieu aquatique. La vanne d'admission 3₂ assure ainsi l'étanchéité du réservoir 2 formé par la deuxième chambre 2 pendant toutes les phases de stockage de la pile et y compris pendant la phase de lancement, ainsi qu'il sera décrit ultérieurement dans la description.

Lorsque l'ensemble du système est amorcé et que la circulation stabilisée de l'électrolyte d'activation est installée, ainsi que décrit précédemment dans la description, l'équilibre des pressions vis-à-vis du milieu aquatique externe est le suivant :
- le réservoir formé par la deuxième chambre 2 est pressurisé par la pompe 2₄;
- les buses d'entrée de la vanne thermostatique 2₈ et de l'échangeur de chaleur 2₉ sont directement soumises à la pression précitée ;
- l'entrée de la pile principale ou plus particulièrement du bloc étanche 2₁₁ₐ formant le bloc électrochimique est pressurisée par la pression de sortie de la vanne thermostatique 2₈, égale à la pression de la chambre 2 formant réservoir, diminuée de la perte de charge induite par la vanne thermostatique 2₈.

En conséquence, la cavité interne de la pile principale 2₁₁ et du module de coque étanche 2₁₁ₐ formant celle-ci est globalement soumise extérieurement à une pression relative au moins égale à la perte de charge 2 induite par la vanne thermostatique 2₈. Cette condition permet d'assurer un bon fonctionnement de la pile électrique principale car la pression précitée permet d'assurer un bon contact de l'empilement des électrodes constitutives des couples électrochimiques, ainsi qu'une bonne continuité électrique interne.

La pression d'entrée du dispositif séparateur de gaz 2₇ est diminuée de la perte de charge introduite par l'empilement des couples électrochimiques 2_{11b}.

La deuxième sortie 2₇₃ du séparateur d'effluents ou de gaz 2₇ est à une pression sensiblement voisine de celle du milieu aquatique et un clapet anti-retour permet de procurer une légère perte de charge par exemple.

La buse de sortie de l'électrolyte d'activation recyclé 2₇₂ du dispositif séparateur de gaz ou d'effluents 2₇ est à une pression sensiblement voisine de la pression d'aspiration de l'eau du milieu aquatique. Le passage au travers de la vanne de mode 2₆ ainsi qu'un clapet anti-retour permettent de procurer une légère perte de charge. En entrée du groupe motopompe, la communication vers le milieu aquatique ouverte par la vanne d'admission 3₂ lors de l'amorçage reste ouverte de façon à équilibrer en permanence, par aspiration de l'eau du milieu aquatique, les variations de volume interne de la pile en particulier de la chambre 2 formant réservoir. Les variations de volume interne précitées sont dues, en particulier, à un dégazage initial du système préalablement à l'admission d'eau du milieu aquatique dans une étape de purge, à la compensation de volume due à l'érosion des électrodes formées par les couples électrochimiques du fait des réactions électrochimiques. La sortie de la vanne de mode 2₆ ainsi que la sortie du régulateur de débit 2₃ se rejoignent ainsi au niveau de la buse d'aspiration 2₅ du groupe motopompe 2₄. Cette jonction s'effectue dans une zone de raccordement soumise à la pression d'immersion dans la chambre 2 formant réservoir.

L'ensemble des fonctions de commande et de contrôle de la pile est réalisé par l'intermédiaire du module de contrôle-commande 1₁ précédemment mentionné dans la description.

De manière plus spécifique le module 1₁ précité assure les fonctions ci-après :
- contrôle des fonctions de la pile à partir des informations issues de la section de contrôle et de guidage de l'engin, non représentée ;
- transmission des paramètres de fonctionnement de la pile vers la section de contrôle et de guidage précitée ;
- régulation de la motopompe 2₄ par l'intermédiaire d'un bloc électronique 3₁ situé dans la troisième chambre 3.

Le mode opératoire précité sera maintenant décrit en liaison avec la Figure 1b aux points 1, 2 et 3 de celle-ci, pour différents organes constitutifs de l'ensemble représenté en Figure 1a.

En particulier, le mode opératoire précité est décrit lorsque sont prévues la vanne d'admission 3₂ à laquelle est associée une vanne d'amorçage 3₅ elle-même commandée par une référence de pression formée par une vanne de pré-positionnement 3₆ et qu'en outre un régulateur de débit 2₃ est monté sur la tubulure 2₁ de raccordement de la vanne d'admission 3₂ et de la buse d'aspiration 2₅ du groupe motopompe 2₄.

La vanne d'admission 3₂ assure l'ouverture au milieu aquatique de la chambre 2 formant réservoir. Plus précisément, elle autorise l'entrée de l'eau du milieu aquatique dans le réservoir, le flux d'eau entrant étant dirigé vers le régulateur de débit 2₃ puis vers le groupe motopompe 2₄.

La vanne de rejet d'effluents 3₃ est couplée à la vanne d'admission 3₂ pour assurer la mise en communication du dispositif séparateur d'effluents ou séparateur de gaz 2₇ avec le milieu aquatique.

La vanne d'admission 3₂ et la vanne de rejet d'effluents 3₃ sont solidaires, placées diamétralement opposées sur le bordé du corps de pile 0 dans un plan de symétrie longitudinal de ce dernier et possèdent avantageusement une section d'ouverture identique, de sorte que les efforts dus à la pression d'immersion dans le milieu aquatique s'équilibrent à tout instant. La vanne d'admission 3₂ est commandée par un actionneur pyrotechnique par exemple. Elle comporte en outre une vanne d'amorçage 3₅ permettant de réaliser l'ouverture au milieu aquatique d'un conduit permettant le positionnement du régulateur de débit 2₃ à la pression d'immersion. La commande de la vanne d'amorçage 3₅ peut être réalisée par l'intermédiaire d'un actionneur pyrotechnique. La commande pyrotechnique de la vanne d'amorçage 3₅ et de la vanne d'admission 3₂ est réalisée par l'intermédiaire du module de contrôle-commande 1₁ avec un décalage temporel spécifique.

La commande pyrotechnique de la vanne d'admission 3₂ agit sur un dispositif mécanique, lequel permet de libérer un ressort de pré-tension. L'ensemble formé par la vanne d'admission 3₂ et la vanne de rejet d'effluents 3₃ reliées par la commande synchronisée 3₄ formée essentiellement par une tige centrale se déplace jusqu'à une butée mécanique. L'orifice d'admission d'eau du milieu aquatique est alors ouvert tandis que l'orifice de rejet des effluents ou gaz reste fermé grâce à l'action de la pression externe sur un clapet. Le dispositif précité interdit l'entrée de l'eau du milieu aquatique par l'intermédiaire de la sortie de la vanne de rejet d'effluents 3₃ pendant la phase d'amorçage.

Lorsque le remplissage de la deuxième chambre 2 formant réservoir est sensiblement atteint, un opercule ménagé sur l'entrée de l'électrolyte d'activation thermostaté 2₁₀ délivré par la vanne thermostatique 2₈ est alors ouvert, l'électrolyte recyclé sort alors du séparateur d'effluents ou de gaz 2₇ et il apparaît une pression interne dans la pile principale 2₁₁ proche de celle de l'eau du milieu aquatique. L'ouverture du clapet de dégazage de la vanne de rejet d'effluents 3₃ est alors possible par l'action du ressort 3₃₀ représenté au dessin. Le clapet, une fois ouvert, ne provoque pas de perte de charge sur le circuit de dégazage.

La vanne d'amorçage 3₅ et la vanne d'admission 3₂ comportent chacune un contact de fin de course, lequel permet de connaître leur état d'activation. Les signaux du contact de fin course précité sont renvoyés aux modules de contrôle-commande 1₁, lequel supervise la totalité de l'opération d'amorçage.

Le régulateur de débit 2₃ est destiné à la limitation du débit d'eau du milieu aquatique admise dans la deuxième chambre 2 par le réglage d'une section de passage adaptée à la pression d'immersion.

Le mode opératoire du régulateur précité consiste à masquer la section maximale de débit du diamètre du conduit d'amenée de l'eau du milieu aquatique par le déplacement d'un tiroir équipé d'orifices calibrés. Le régulateur de débit précité 2₃ est implanté dans le réservoir. Il est connecté entre la vanne d'admission 3₂ et la buse d'aspiration 2₅ de la motopompe 2₄.

La vanne d'amorçage 3₅ applique la pression d'immersion sur le tiroir du régulateur par l'intermédiaire d'un conduit de référence de pression extérieure RPE. Le tiroir précité occupe alors une position d'équilibre imposée par un ressort. Le déplacement du tiroir est proportionnel à la pression appliquée. La section de passage de l'eau du milieu aquatique est ainsi partiellement obturée et le débit est alors préréglé dans une plage de valeurs comprises entre 10 à 15 litres/seconde.

En fin de remplissage, lorsque la pression de la deuxième chambre 2 formant réservoir est supérieure à celle du milieu aquatique, le régulateur retrouve une position de pleine ouverture. Ceci permet ultérieurement une opération de rinçage aisé de la pile lors de la réalisation d'une mission non destructive par exemple.

La régulation de débit est prévue pour des pressions extérieures du milieu aquatique correspondant à des profondeurs comprises entre 10 et 350 mètres d'immersion. Le réglage peut être effectué pour des valeurs différentes inférieures et/ou supérieures. Le régulateur de débit 2₃ comporte une prise de pression d'entrée formant une référence de pression du milieu aquatique extérieur RPE pour l'ensemble.

La vanne thermostatique 2₈ est placée en partie basse de la coque étanche 2₁₁ₐ formant la pile principale. Elle est placée au voisinage des orifices d'irrigation des couples électrochimiques 2_{11b} constitutifs de la pile principale précitée et assure ainsi l'entrée du flux d'électrolyte d'activation thermostaté 2₁₀ à une température sensiblement constante, laquelle peut être comprise entre 80 et 98°C par exemple.

La vanne thermostatique 2₈ fonctionne sur un principe purement mécanique. Elle met en oeuvre une sonde thermostatique pour asservir en position un tiroir. Selon la position de ce dernier, le tiroir découvre des lumières de passage sur l'entrée chaude et sur l'entrée froide de façon que le mélange irriguant la sonde soit constamment à température définie.

La vanne thermostatique 2₈ précitée est équipée en sortie d'un opercule 2₈₀ claquable à une valeur de pression déterminée, de l'ordre de 3,0 Bar, cet opercule maintenant la cavité interne du bloc électrochimique fermée tant que la pression dans le réservoir n'est pas suffisante.

La vanne thermostatique 2₈ est équipée d'un filtre entourant les orifices d'entrée chaude du réservoir. Dans ces conditions, des grains de soude de taille supérieure à une valeur déterminée de l'ordre de 300 microns sont arrêtés, tandis que le flux sortant de la pompe permet un décolmatage permanent du filtre.

La vanne thermostatique 2₈ comporte une sonde de température dont la mesure est conditionnée par le module de commande de la pile électrique de propulsion 1₁. Elle comporte en outre une prise de pression RPBEI en entrée de la coque étanche 2₁₁ₐ de la pile électrique principale, cette prise de pression étant destinée à un capteur de pression CP₆ permettant de piloter la vanne de mode 2₆ ainsi qu'il sera décrit ultérieurement dans la description.

La température de régulation nominale maintenue par la vanne thermostatique pour un fonctionnement à puissance maximale de la pile et pour une faible pression d'immersion est voisine de 95°C alors que, pour une grande immersion, la dérive de la sonde autorise un fonctionnement jusqu'à 98°C environ.

Le séparateur d'effluents ou de gaz 2₇ collecte l'électrolyte d'activation sortant du bloc électrochimique en partie haute de la coque étanche 2₁₁ₐ formant ce dernier. Il permet d'assurer la séparation des gaz ou effluents par effet cyclonique dès que le régime de circulation d'électrolyte est établi. Il est implanté dans le réservoir formé par la chambre 2 et constitué par un métal, tel que l'acier inoxydable, afin d'assurer une bonne conduction de la chaleur et le maintien à température de l'électrolyte d'activation soumis au phénomène de séparation d'effluents voisine de celle de l'électrolyte d'activation, contenu dans le réservoir mais non soumis au phénomène de séparation d'effluents.

Pendant la phase d'amorçage, le séparateur d'effluents ou de gaz 2₇ transfère les effluents ou gaz du bloc électrochimique vers la vanne de rejet d'effluents 3₃ du fait de la position de la vanne de mode 2₆, laquelle bloque le retour liquide normal du dégazeur vers la motopompe 2₄.

Entre la sortie du bloc électrochimique et l'entrée du dispositif séparateur d'effluents de gaz 2₇ est raccordé un tuyau d'aspiration permettant d'évacuer les gaz restés piégés dans la deuxième chambre 2 formant réservoir. Ce mode opératoire est permis du fait que la pression dans le réservoir est supérieure à celle à l'entrée du dispositif séparateur de gaz 2₇. Pendant la phase de croisière, ce tube de dégazage procure une fuite interne au système, laquelle est très faible et tout à fait acceptable tout en garantissant l'évacuation possible de gaz qui peuvent décanter dans la deuxième chambre 2 formant réservoir.

La buse de sortie 2₇₃ du dispositif séparateur de gaz 2₇ est reliée à la vanne de rejet 3₃ d'effluents ou de gaz au travers du tube étanche 2₂ et d'un clapet. Le tube précité permet le rinçage de la pile avec un débit de l'ordre de trois litres/seconde.

La buse de sortie du dispositif séparateur d'effluents ou gaz 2₇ délivrant l'électrolyte d'activation recyclé au voisinage de la buse 2₅ d'aspiration de la motopompe est reliée à cette dernière par l'intermédiaire de la vanne de mode 2₆. Lorsque cette dernière est en position fermée, c'est-à-dire pendant l'amorçage et pendant le rinçage de la pile électrique de propulsion d'engin en milieu aquatique objet de l'invention, l'ensemble du débit est orienté dans la vanne de mode 2₆ vers la sortie d'effluents ou gaz. Lorsque la vanne de mode 2₆ est ouverte, le liquide du dégazeur traverse la vanne de mode précitée et est aspiré par la pompe par l'intermédiaire de la buse d'aspiration 2₅ de celle-ci.

L'entrée du dispositif séparateur de gaz ou d'effluents 2₇ comporte en outre une sonde de température CT₇ identique à celle d'entrée CT₈ située sur la vanne thermostatique 2₈ ainsi qu'un piquage de pression permettant de délivrer la pression de sortie du bloc électrochimique, encore désignée RPBEO. Cette prise de pression permet de gérer le mode de fonctionnement de la pile par le module de commande 1₁.

Enfin, la vanne de mode 2₆ est avantageusement constituée par une vanne à trois voies et deux positions stables ouverte et fermée comportant un tiroir commandé par une pression motrice et équilibrée par un ressort. Elle comprend deux électrovannes simples à deux voies EV1 et EV2 permettant de gérer l'application de la pression motrice sur le tiroir précité.

L'électrovanne EV1 relie la prise de pression d'immersion RPE du régulateur de débit 2₃ à la chambre de la vanne de mode 2₆. L'électrovanne EV1 est une vanne normalement ouverte en l'absence d'alimentation électrique.

L'électrovanne EV2 relie la prise de pression d'entrée du bloc électrochimique, c'est-à-dire la pression de sortie de la vanne thermostatique 2₈, encore désignée RPVT, à la chambre de la vanne de mode 2₆. L'électrovanne EV2 est une vanne normalement fermée.

La vanne de mode 2₆ permet d'orienter l'électrolyte d'activation en sortie à la buse de sortie 2₇₂ du dispositif séparateur d'effluents de gaz 2₇ selon deux trajets correspondant à des modes de fonctionnement de la pile :
- en position haute ou fermée, aucune pression n'est appliquée à la vanne de mode 2₆. Dans ces conditions, cette dernière oriente les flux d'effluents vers la vanne de sortie de gaz 3₃. Ce mode de fonctionnement a lieu lors de l'amorçage, afin de purger les gaz vers le milieu aquatique, et en fin de mission, lors du rinçage de la pile dans le cas d'une mission non destructive.
- en position basse ou ouverte, la vanne de mode 2₆ reçoit la pression motrice qui positionne son tiroir en position basse et elle oriente l'électrolyte vers l'entrée de la motopompe, buse d'aspiration 2₅, de sorte que l'électrolyte d'activation circule en boucle fermée dans la pile.

Les deux électrovannes EV1 et EV2 sont entièrement pilotées par le module de commande 1₁. Selon le schéma représente au point 3 de la Figure 1b:
- durant la phase d'activation, c'est-à-dire de lancement de l'engin, la vanne EV1 est alimentée et donc fermée, ce qui interdit à la pression d'entrée du régulateur de débit 2₃ d'agir sur le tiroir de la vanne de mode 2₆. Par contre, l'électrovanne EV2 est non-alimentée et donc fermée en attendant un signal de commande délivré par le module de commande 1₁. Dans ces conditions, la vanne de mode 2₆ n'est pas sollicitée et reste en position haute ou fermée. On comprend en effet que l'alimentation en énergie électrique de l'électrovanne EV1 par la pile auxiliaire 1₀ est autorisée dès l'amorçage initial de cette dernière ;
- en fin de remplissage du réservoir formé par la deuxième chambre 2, lorsque les conditions de pression sont détectées, l'électrovanne EV2 est alimentée, ce qui permet d'appliquer la pression d'entrée du bloc électrochimique, c'est-à-dire la pression d'entrée RPVT sur le tiroir de la vanne de mode 2₆. Ce dernier bascule et autorise alors le passage de l'électrolyte d'activation recyclé issu du dispositif de séparation d'effluents ou de gaz 2₇ vers la pompe 2₄. L'électrovanne EV1 de son côté reste fermée.

A la fin d'une mission non destructive par exemple, l'alimentation de la première électrovanne EV1 est coupée, ce qui décomprime la chambre de la vanne de mode 2₆ et permet la remontée du tiroir en position haute. L'électrolyte d'activation est alors évacué par la sortie d'effluents ou de gaz, c'est-à-dire par la vanne de rejet d'effluents 3₃. Simultanément, l'alimentation de l'électrovanne EV2 est coupée, ce qui interdit alors à la pression d'entrée du bloc électrochimique, c'est-à-dire la pression RPVT, d'agir sur le tiroir de la vanne de mode 2₆.

La commande des électrovannes EV1 et EV2 est effectuée par le module de contrôle-commande 1₁ précité, lequel opère à partir des informations de pression issues des prises de pression ci-après :
- prise de pression du réservoir ;
- prise de pression d'immersion RPE ;
- prise de pression de sortie du bloc électrochimique RPBEO.

Deux capteurs de pression différentiels non représentés au dessin permettent de fournir à partir des prises de pression ci-dessus les informations suivantes au module de contrôle-commande 1₁ :
- la différence de pression réservoir-immersion indique l'état de fonctionnement de la boucle de circulation. Cette différence de pression doit être en accord avec l'état de la pile et la commande de débit de la pompe ;
- la différence de pression sortie bloc électrochimique-immersion indique l'état de remplissage de la pile.

Le mode opératoire et la commande de la deuxième électrovanne EV2 par le module de commande 1₁ qui provoque la commutation de la vanne de mode 26 est effectuée sur les critéres ci-après :
- écart de pression entre la sortie du bloc électrochimique et le milieu aquatique ;
- veille de la tension électrique délivrée par le bloc électrochimique ;
- veille de la température de sortie du bloc électrochimique ;
- chronologie de l'amorçage.
En synthèse, la logique de pilotage de la vanne de mode 2₆ au travers de l'alimentation de commande des deux électrovannes EV1 et EV2 est donnée ci-après selon le tableau suivant :

| | | |
|---|---|---|
| 1. Etat initial | EV1 = 0 | EV2 = 0 |
| 2. Dès que la tension Pile Thermique est OK | EV1 = 1 | EV2 = 0 |
| 3. Dès que pression «Sortie BE-Immersion est OK | EV1 = 1 | EV2 = 1 |
| 4. Dès que l'ordre d'arrêt parvient au module 1₁ | EV1 = 0 | EV2 = 0 |

Par ailleurs, la position basse du tiroir de la vanne de mode 2₆ est détectée par l'intermédiaire d'un capteur magnétique CM₆ et est acquise par le module de contrôle-commande 1₁.

Le mode opératoire de l'ensemble est représenté en référence aux points 1), 2) et 3) de la Figure 1b dans lesquels :
- au point 1) sont représentées la phase de lancement respectivement de croisière de l'engin, la phase de lancement pouvant durer quelques secondes ou dizaines de secondes et la phase de croisière pouvant durer plusieurs dizaines de minutes ;
- au point 2) est représenté le diagramme des tensions délivrées par la pile auxiliaire et la pile électrique principale respectivement, étant entendu que la tension nominale V'N de la pile auxiliaire de l'ordre de 165 V est sensiblement différente de celle de la pile électrique principale 245 V, par exemple.
- au point 3) est représentée la commande des deux électrovannes V1 et V2 constitutives de la vanne de mode 2₆ selon le tableau précédent.

En ce qui concerne la motopompe 2₄, on indique que cette dernière assure la circulation et le recyclage de l'électrolyte d'activation à débit variable. Elle peut être constituée par une pompe centrifuge immergée dans le réservoir d'électrolyte et d'un moteur également immergé. Le moteur est un moteur du type à pilotage en vitesse en fonction du besoin de pompage. L'électronique de commande du moteur est désignée par le bloc 3₁ et placée dans la chambre 3, par exemple.

L'alimentation du moteur de la pompe est avantageusement réalisée à partir du réseau électrique principal de la pile principale à 400 V alors que l'alimentation de l'électronique de contrôle peut être réalisée sur le circuit auxiliaire de la pile à 200 V. En particulier, lorsque la pile principale a pris le relais de la pile auxiliaire, le réseau secondaire peut être alimenté à partir de la mi-tension délivrée par la pile principale.

Enfin, la motopompe 2₄ est commandée en vitesse par le module de commande 1₁ par l'intermédiaire d'une liaison série RS422 de type classique.

La motopompe peut être commandée selon des régimes de fonctionnement discrets à débit par paliers.

La motopompe 2₄ fournit des informations relatives à :
- courant absorbé ;
- vitesse de rotation ;
- température des circuits d'alimentation convertisseurs à IGBT (pour Insulated Gate Bipolar Transistor) ;
- compte rendu d'auto test.

Le démarrage de la motopompe 2₄ est commandé par le module de contrôle-commande 1₁ dès réception par ce dernier du signal de contact fourni par l'ouverture de la vanne d'admission 3₂.

Une description plus détaillée de la structure de la pile électrique de propulsion d'engin en milieu aquatique et d'un mode de mise en oeuvre de cette structure conforme à l'objet de la présente invention sera maintenant donnée ci-après.

Ainsi que représenté sur la Figure 1a, le corps de pile étanche 0 est avantageusement formé par un assemblage d'éléments constitués au moins par une virole avant 0₁, un fond avant 0₂ de pile électrique principale, la virole avant 0₁ et le fond avant 0₂ formant la troisième chambre 3 précédemment citée.

Le corps de pile étanche 0 comporte en outre une coque centrale 0₃ et un fond arrière 0₄, le fond avant 0₂, la coque centrale 0₃ et le fond arrière 0₄ formant la deuxième chambre 2 constituant le réservoir.

Enfin, le corps de pile étanche 0 comprend une virole arrière 0₅, le fond arrière 0₄ et la virole arrière 0₅ constituant la première chambre 1.

Ainsi qu'on l'a représenté en outre en Figure 1a, la coque centrale 0₃ au moins est constituée par un alliage métallique bon conducteur thermique. Une partie au moins de la coque centrale 0₃ placée au voisinage de la pile électrique principale 2₁₁ et en particulier du bloc électrochimique formant celle-ci constitue l'échangeur thermique avec le milieu aquatique et en particulier l'échangeur de chaleur 2₉ pour au moins le flux dérivé d'électrolyte d'activation.

Sur la Figure 1a, on observe que le flux dérivé d'électrolyte d'activation est engendré par la pression produite par la motopompe 2₄ dans un interstice 2₉₁ ménagé en partie inférieure de la Figure 1a, entre la paroi de la coque centrale 0₂ et une paroi métallique rendue solidaire de la vanne thermostatique 2₈, et finalement du corps étanche 2₁₁ₐ formant le bloc électrochimique 2₁₁. L'interstice 2₉₁ précité permet d'engendrer le flux d'électrolyte d'activation dérivé à température sensiblement constante servant de température de consigne pour la vanne thermostatique 2₈ précitée.

De préférence, la virole avant 0₁, le fond avant 0₂ de pile électrique, la coque centrale 0₃ et le fond arrière 0₄ ainsi que la virole arrière 0₅ sont constitués en un matériau métallique. La face externe de ces derniers destinée à être en contact avec le milieu aquatique est avantageusement munie d'une couche de protection anti-corrosion obtenue par oxydation anodique dure.

En ce qui concerne la coque centrale 0₃, on indique que cette dernière comprise entre le fond avant et le fond arrière, est réalisée en un seul tronçon et ne comporte aucune ouverture en bordé de façon à garantir l'étanchéité de l'ensemble pendant toutes les phases de stockage de la pile de propulsion d'engin en milieu aquatique conforme à l'objet de la présente invention. Cette conception spécifique permet de mettre en place une double étanchéité du réservoir formé par la deuxième chambre 2 vis-à-vis du milieu aquatique externe, au niveau des jonctions avec les fonds avant 0₂ et arrière 0₄.

Ainsi que représenté sur la Figure 1a, le corps de pile et en particulier la deuxième chambre 2 est munie d'une double barrière d'étanchéité vis-à-vis du milieu aquatique externe.

Une première barrière d'étanchéité, notée B₁, est formée par un joint d'étanchéité entre le milieu aquatique et la première chambre, respectivement la troisième chambre et une deuxième barrière d'étanchéité, B₂, est formée par un joint d'étanchéité entre la première et la deuxième chambre respectivement la deuxième et la troisième chambre. Les barrières d'étanchéité précitées sont représentées par des hachures spécifiques sur la Figure 1a.

Enfin, on indique que la face interne de la coque centrale 0₃, autre que la partie formant échangeur thermique 2₉, comporte en outre un revêtement isolant thermique au niveau de la partie formant réservoir de l'électrolyte d'activation. Ce revêtement isolant thermique a pour objet de réduire le refroidissement de l'électrolyte d'activation stocké par échange thermique avec le milieu aquatique pendant la phase de croisière. Ce revêtement isolant thermique peut être constitué par un revêtement de type résine epoxy par exemple.

En outre, la face interne du fond avant 0₂ de pile électrique de la coque centrale 0₃ et du fond arrière 0₄ de pile électrique constituant la deuxième chambre 2 formant réservoir comporte un revêtement de nickel chimique protecteur anti-corrosion par la soude anhydre.

La gestion de l'étanchéité de la deuxième chambre 2 formant réservoir peut alors être effectuée de la manière ci-après :
- le réservoir est la partie de la pile électrique de propulsion d'engin en milieu aquatique conforme à l'objet de la présente invention qui comporte les composants actifs de la pile en particulier la soude et le bloc électrochimique. Pour cette raison, les éléments constitutifs du réservoir précité ont été organisés afin que, ensemble, ils présentent une étanchéité totale vis-à-vis d'un stockage en eau du milieu aquatique grâce aux deux barrières d'étanchéité B1 et B2 précédemment mentionnées formées par des joints d'étanchéité spécifiques.

En cas d'immersion intempestive notamment de la partie réservoir, aucune matière électrochimique n'est en contact avec l'eau du milieu aquatique. Deux détecteurs d'eau, l'un placé à l'avant et l'autre à l'arrière, c'est-à-dire dans les chambres 1 et 3 par exemple, sont reliés par un câblage spécifique d'une part au module de contrôle-commande 1₁ et d'autre part au système de lancement externe, lequel peut ainsi veiller à la sécurité de la pile avant lancement de l'engin.

La deuxième barrière d'étanchéité B2 permet d'assurer l'intégrité de la fonction réservoir vis-à-vis du milieu aquatique externe.

Un manostat non représenté au dessin, peut être prévu afin de permettre le contrôle permanent de l'étanchéité de la vanne de mode 2₆. Le manostat précité est raccordé entre les deux joints d'étanchéité de la vanne de mode 2₆, d'une part sur la partie entrée d'eau, c'est-à-dire sur la buse 2₇₂ de sortie du séparateur d'effluents ou de gaz 2₇ à laquelle est reliée la vanne de mode 2₆ précitée et d'autre part sur la partie sortie gaz 2₇₃ du séparateur 2₇ précité. La double barrière d'étanchéité B1 et B2 équipée des détecteurs d'eau et de pression précédemment cités permet de garantir un haut niveau de fiabilité de l'étanchéité de la pile électrique de propulsion d'engin en milieu aquatique objet de la présente invention.

Enfin, la virole avant 0₁ et la virole arrière 0₅ présentent, ainsi que représenté en Figure 1a, une extrémité distale ouverte vis-à-vis du fond avant 0₂ respectivement arrière 0₄ de pile. Ce mode de mise en oeuvre permet de constituer la pile électrique de propulsion, objet de l'invention, sous forme d'un module indépendant stockable selon un composant sensiblement inerte avec sa charge de réserve de soude anhydre lorsque la pile électrique de propulsion n'est pas montée avec l'engin, ainsi que sous forme d'un élément intégré directement au corps de l'engin dans le cas contraire. Dans ce but, dans un mode de mise en oeuvre non limitatif, la virole avant 0₁, la coque centrale 0₃ et la virole arrière 0₅ présentent avantageusement une section sensiblement cylindrique de révolution. La forme précitée est particulièrement adaptée à une intégration au corps de l'engin lorsque cet engin est constitué par une torpille par exemple ou par un engin sous-marin d'observation. Dans cette situation, l'extrémité distale de la virole avant est mécaniquement solidaire et électriquement couplée à la partie active de l'engin et l'extrémité distale de la virole arrière est mécaniquement solidaire et électriquement couplée à la partie arrière propulsive et de commande de l'engin, pour constituer une pile électrique de propulsion activable dès la mise à l'eau de l'engin dans le milieu aquatique.

On comprend en particulier que l'ensemble représenté en Figure 1a comprend les liaisons filaires par câbles et/ou par bus, ainsi que mentionné précédemment, entre la première chambre 1, la deuxième chambre 2 et la troisième chambre 3, bien que l'ensemble de ces liaisons ne soit pas en totalité représenté aux dessins.

Dans ces conditions, on indique que la pile de propulsion d'un engin en milieu aquatique conforme à l'objet de la présente invention comporte des capteurs de température du flux d'électrolyte d'activation entrant et sortant de la pile électrique principale afin de permettre d'assurer la régulation en température du flux d'électrolyte d'activation par l'intermédiaire de la vanne thermostatique 2₈.

Elle comporte en outre des capteurs de pression relative de l'électrolyte d'activation dans la deuxième chambre 2 formant réservoir de ce même électrolyte d'activation à l'entrée du dispositif de circulation de l'électrolyte d'activation et de séparation des effluents 2₇, ces capteurs de pression relative délivrant une pression relative vis-à-vis de la pression externe au corps de pile étanche, c'est-à-dire de la référence de pression RPE précédemment mentionnée dans la description.

Elle comprend enfin une pluralité de contacts ou de détection de contact d'étanchéité de la vanne d'admission de l'eau du milieu aquatique 3₂, contact d'ouverture de la vanne d'admission de l'eau au corps de pile étanche 2₁₁ₐ précité. Bien entendu, l'ensemble de ces capteurs et/ou contacts est relié par des connections adaptées munies de traversées étanches de manière connue en tant que telle.

Des traversées électriques étanches de puissance telles que représentées en Figure 1a sous la référence 1₂ et 1₃ permettent la connection de la pile auxiliaire 1₀ à l'ensemble des éléments contenus dans la deuxième chambre 2 formant réservoir et la troisième chambre 3 ou chambre avant pour alimenter le module électronique 3₁ de la motopompe 2₄, la traversée électrique étanche 1₃ directement reliée au bloc électrochimique et en particulier aux couples électrochimiques, afin de délivrer l'énergie électrique de puissance au groupe de propulsion de l'engin porteur de la pile électrique de propulsion d'engin en milieu aquatique, conforme à l'objet de la présente invention. La fourniture de l'énergie de propulsion est réalisée par l'intermédiaire d'un connecteur de puissance muni d'un capteur d'intensité CI ainsi que représenté aux dessins sur la Figure 1a.

## Revendications

1. Pile électrique de propulsion d'engin en milieu aquatique, **caractérisée en ce que** celle-ci comporte au moins dans un corps de pile étanche :
- une première chambre formant un logement comportant une pile électrique auxiliaire et un module de contrôle-commande de la pile électrique de propulsion ;
- une deuxième chambre formant un logement comportant une pile électrique principale de type électrochimique, ladite deuxième chambre étant munie d'organes d'admission contrôlée et de régulation d'un flux d'eau du milieu aquatique dans ladite deuxième chambre, formant réservoir, pour former, suite à la commande d'admission de l'eau du milieu aquatique un électrolyte d'activation de ladite pile électrique principale ;
- une troisième chambre formant un logement comportant un module d'amorçage d'admission par aspiration de l'eau du milieu aquatique et de rejet par échappement d'effluents issus de la réaction chimique de la pile principale dans le milieu aquatique, à partir d'une vanne d'admission respectivement d'une vanne d'échappement montées dans ladite troisième chambre, ledit module de contrôle-commande de la pile électrique de propulsion permettant l'actionnement de ladite pile électrique auxiliaire pour engendrer temporairement de l'énergie électrique pendant une étape de lancement dudit engin en milieu aquatique et l'amorçage de l'admission par aspiration de l'eau du milieu aquatique et de rejet par échappement d'effluents pour produire de l'énergie électrique à partir de ladite pile électrique principale pendant une phase de croisière.

2. Pile électrique de propulsion selon la revendication 1, **caractérisée en ce que** lesdites piles électriques auxiliaire et principale sont commandées séquentiellement par ledit module de contrôle-commande de la pile électrique de propulsion et connectées sur un réseau de distribution d'énergie électrique principal respectivement secondaire.

3. Pile électrique de propulsion selon l'une des revendications 1 ou 2, **caractérisée en ce que** ladite pile électrique auxiliaire est formée par un ensemble d'éléments de piles thermiques, amorcées par allumage pyrotechnique.

4. Pile électrique de propulsion selon l'une des revendications 1 à 3, **caractérisée en ce que** lesdits organes d'admission contrôlée et de régulation d'un flux d'eau du milieu aquatique dans ladite deuxième chambre comportent au moins :
- un groupe moto-pompe dont la buse d'aspiration est reliée à ladite vanne d'admission de l'eau du milieu aquatique et dont la buse de sortie délivre l'eau du milieu aquatique aspirée directement dans ladite deuxième chambre formant réservoir, de façon à former ledit électrolyte d'activation et à immerger ladite pile électrique principale dans ce dernier ;
- une vanne thermostatique reliée à ladite pile électrique principale, ladite vanne thermostatique permettant de réguler l'admission dudit électrolyte d'activation dans ladite pile principale pour amorcer l'activation de ladite pile électrique principale par réaction électrochimique ;
- un dispositif de circulation de l'électrolyte d'activation et de séparation des effluents, ledit dispositif de circulation et de séparation comportant une buse d'entrée reliée à la cavité interne de ladite pile électrique principale, contenant l'électrolyte d'activation, une première buse de sortie reliée au voisinage de la buse d'admission de la moto-pompe et une deuxième buse de sortie d'effluents reliée à ladite vanne de rejet placée dans ladite troisième chambre.

5. Pile électrique de propulsion selon la revendication 4, **caractérisée en ce que** ladite deuxième buse de sortie dudit dispositif de circulation et de séparation est reliée à ladite vanne de rejet placée dans ladite troisième chambre par l'intermédiaire d'une vanne de mode permettant d'orienter, dans une première position, les effluents vers la vanne de rejet d'effluents lors de l'amorçage de la pile électrique principale pendant la phase de lancement, respectivement, dans une deuxième position, l'électrolyte d'activation vers la buse d'aspiration de la moto-pompe, de manière à engendrer une circulation en boucle fermée de l'électrolyte d'activation dans la pile électrique principale pendant la phase de croisière.

6. Pile électrique selon la revendication 4 ou 5, **caractérisée en ce que** ladite vanne thermostatique est formée par une vanne à trois voies recevant :
- un flux direct d'électrolyte d'activation puisé dans ladite deuxième chambre formant réservoir,
- un flux dérivé d'électrolyte d'activation, transitant par un échangeur de chaleur, le flux dérivé étant maintenu à température sensiblement constante par ledit échangeur de chaleur, ladite vanne thermostatique délivrant, à partir dudit flux direct et dudit flux dérivé à température sensiblement constante, servant de température de consigne, un flux d'électrolyte d'activation thermostaté, à température sensiblement constante à la cavité interne de ladite pile électrique principale.

7. Pile électrique de propulsion selon l'une des revendications 1 à 6, **caractérisé en ce que** ladite pile électrique principale de type électrochimique est une pile AgO-Al.

8. Pile électrique de propulsion, selon les revendications 4 et 7, **caractérisée en ce que** ladite pile électrique principale de type électrochimique est formée par :
- un bloc électrochimique constitué par un empilage de couples électrochimiques AgO - Al placés dans la cavité d'un module étanche, relié d'une part à ladite vanne thermostatique, et, d'autre part audit dispositif de circulation de l'électrolyte ;
- une réserve de soude anhydre, ledit bloc électrochimique et ladite réserve de soude anhydre étant placés dans ladite deuxième chambre formant réservoir.

9. Pile électrique de propulsion, selon la revendication 8, **caractérisée en ce que** ladite réserve de soude anhydre est constituée par un mélange de microperles de soude anhydre et de stannates en poudre, chargés en vrac dans ladite deuxième chambre formant réservoir.

10. Pile électrique de propulsion, selon l'une des revendications 1 à 9, **caractérisée en ce que** ledit corps de pile étanche est formé par un assemblage d'éléments constitués au moins par :
- une virole avant ;
- un fond avant de pile électrique principale, ladite virole avant et ledit fond avant formant ladite troisième chambre ;
- une coque centrale ;
- un fond arrière, ledit fond avant, ladite coque centrale et ledit fond arrière formant ladite deuxième chambre ;
- une virole arrière, ledit fond arrière et ladite virole arrière formant ladite première chambre.

11. Pile électrique de propulsion selon la revendication 10, **caractérisée en ce que** ladite coque centrale au moins est constituée par un alliage métallique bon conducteur thermique, une partie au moins de ladite coque centrale placée au voisinage de ladite pile électrique principale constituant un échangeur thermique avec ledit milieu aquatique, pour former un échangeur de chaleur pour au moins un flux dérivé d'électrolyte d'activation.

12. Pile électrique de propulsion selon l'une des revendications 10 ou 11, **caractérisée en ce que** la virole avant, le fond avant de pile électrique, la coque centrale, le fond arrière de pile électrique et la virole arrière sont constitués en un matériau métallique, la face externe de ces derniers destinée à être en contact avec le milieu aquatique étant munie d'une couche de protection anticorrosion obtenue par oxydation anodique dure.

13. Pile électrique de propulsion selon l'une des revendications 10 à 12, **caractérisée en ce que** la face interne du fond avant de pile électrique, de la coque centrale et du fond arrière de pile électrique constituant ladite deuxième chambre formant réservoir comportent un revêtement de nickel chimique protecteur anticorrosion par la soude anhydre.

14. Pile électrique de propulsion selon l'une des revendications 11 à 13, **caractérisée en ce que** la face interne de ladite coque centrale, autre que la partie formant échangeur thermique, comporte en outre un revêtement isolant thermique, au niveau de la partie formant réservoir de l'électrolyte d'activation, afin de réduire le refroidissement de l'électrolyte d'activation stocké par échange thermique avec le milieu aquatique pendant la phase de croisière.

15. Pile électrique de propulsion selon l'une des revendications 10 à 14, **caractérisée en ce que** ledit corps de pile étanche est muni d'une double barrière d'étanchéité vis-à-vis dudit milieu aquatique :
- une première barrière d'étanchéité formée par un joint d'étanchéité entre le milieu aquatique et la première respectivement la troisième chambre ;
- une deuxième barrière d'étanchéité formée par un joint d'étanchéité entre la première et la deuxième chambre respectivement la deuxième et la troisième chambre.

16. Pile électrique de propulsion selon l'une des revendications 10 à 15, **caractérisée en ce que** celle-ci comporte en outre :
- une pluralité de capteurs de température du flux d'électrolyte d'activation entrant dans respectivement sortant de la pile électrique principale, permettant d'assurer la régulation en température du flux d'électrolyte d'activation par l'intermédiaire de ladite vanne thermostatique ;
- une pluralité de capteurs de pression relative de l'électrolyte d'activation dans la deuxième chambre formant réservoir, de l'électrolyte d'activation à l'entrée du dispositif de circulation de l'électrolyte d'activation et de séparation des effluents, lesdits capteurs de pression relative délivrant une valeur de pression relative vis-à-vis de la pression externe au corps de pile étanche ;
- une pluralité de contacts, contact d'étanchéité de la vanne d'admission de l'eau du milieu aquatique, contact d'ouverture de la vanne d'admission de l'eau au corps de pile étanche.

17. Pile électrique de propulsion selon l'une des revendications 10 à 16, **caractérisée en ce que** la virole avant, la coque centrale et la virole arrière présentent une section sensiblement cylindrique de révolution.

18. Pile électrique de propulsion selon la revendication 17, **caractérisée en ce que** la virole avant et la virole arrière présentent une extrémité distale ouverte vis-à-vis du fond avant respectivement arrière de pile, de façon à constituer ladite pile électrique de propulsion, d'une part, sous forme d'un module indépendant stockable selon un composant sensiblement inerte avec sa charge de réserve de soude anhydre lorsque la pile électrique de propulsion n'est pas montée avec l'engin, et, d'autre part, sous forme d'un élément intégré directement au corps de l'engin, l'extrémité distale de ladite virole avant étant mécaniquement solidaire et électriquement couplée à une partie active de l'engin et l'extrémité distale de la virole arrière étant mécaniquement solidaire et électriquement couplée à la partie arrière propulsive et de commande de l'engin, pour constituer une pile électrique de propulsion activable dès la mise à l'eau de l'engin.

19. Utilisation d'une pile électrique de propulsion d'engin en milieu aquatique selon l'une des revendications 1 à 18 pour l'alimentation, la propulsion et la commande d'un engin tel qu'une torpille, un sous-marin de reconnaissance ou un engin de surface.

## Claims

1. Electric propulsion cell for craft in an aquatic medium, **characterised in that** it comprises in a watertight cell body at least:
- a first chamber forming a housing containing an auxiliary electric cell and a monitoring/control module of the electric propulsion cell;
- a second chamber forming a housing containing a main electric cell of electrochemical type, said second chamber being provided with elements for the controlled admission and regulation of a flow of water from the aquatic medium into said second, reservoir-forming chamber to form, subsequent to the command for admission of water from the aquatic medium, an electrolyte for activation of said main electric cell;
- a third chamber forming a housing containing a module for triggering the admission, by drawing in, of water from the aquatic medium and the expelling, by discharge, of waste products produced by the chemical reaction of the main cell into the aquatic medium, by means of an admission valve and a discharge valve, respectively, which are mounted in said third chamber, said monitoring/control module of the electric propulsion cell enabling actuation of said auxiliary electric cell so as to generate electrical energy temporarily during a step of launching said craft into the aquatic medium and triggering the admission, by drawing in, of water from the aquatic medium and the expelling, by discharge, of waste products so as to produce electrical energy by means of said main electric cell during a cruising phase.

2. Electric propulsion cell according to claim 1, **characterised in that** said auxiliary and main electric cells are controlled sequentially by said monitoring/control module of the electric propulsion cell and are connected to a main and secondary, respectively, electrical energy distribution network.

3. Electric propulsion cell according to one of claims 1 or 2, **characterised in that** said auxiliary electric cell is formed by an assembly of thermal cell elements triggered by pyrotechnic ignition.

4. Electric propulsion cell according to one of claims 1 to 3, **characterised in that** said elements for the controlled admission and regulation of a flow of water from the aquatic medium into said second chamber comprise at least:
- a motor-driven pump group the drawing-in nozzle of which is connected to said valve for the admission of water from the aquatic medium and the outlet nozzle of which delivers the drawn-in water from the aquatic medium directly into said second, reservoir-forming chamber so as to form said activation electrolyte and to flood said main electric cell with the latter;
- a thermostatic valve connected to said main electric cell, said thermostatic valve enabling regulation of the admission of said activation electrolyte into said main cell so as to trigger activation of said main electric cell by electrochemical reaction;
- a device for circulation of the activation electrolyte and separation of the waste products, said circulation and separation device comprising an inlet nozzle connected to the internal cavity of said main electric cell, which contains the activation electrolyte, a first outlet nozzle connected to the vicinity of the admission nozzle of the motor-driven pump and a second outlet nozzle for waste products, which is connected to said discharge valve located in said third chamber.

5. Electric propulsion cell according to claim 4, **characterised in that** said second outlet nozzle of said circulation and separation device is connected to said discharge valve located in said third chamber by way of a mode valve making it possible, in a first position, to direct the waste products towards the waste product discharge valve on triggering the main electric cell during the launch phase and also, in a second position, to direct the activation electrolyte towards the drawing-in nozzle of the motor-driven pump so as to bring about closed-loop circulation of the activation electrolyte in the main electric cell during the cruising phase.

6. Electric cell according to claim 4 or 5, **characterised in that** said thermostatic valve is formed by a three-way valve receiving:
- a direct flow of activation electrolyte taken from said second, reservoir-forming chamber,
- a diverted flow of activation electrolyte which has passed through a heat exchanger, the diverted flow being maintained at a substantially constant temperature by said heat exchanger, and said thermostatic valve delivering, starting from said direct flow and from said diverted flow at a substantially constant temperature serving as a temperature setpoint, a temperature-controlled flow of activation electrolyte at a substantially constant temperature to the internal cavity of said main electric cell.

7. Electric propulsion cell according to one of claims 1 to 6, **characterised in that** said main electric cell of electrochemical type is an AgO-Al cell.

8. Electric propulsion cell according to claims 4 and 7, **characterised in that** said main electric cell of electrochemical type is formed by:
- an electrochemical unit composed of a stack of electrochemical couples of AgO-Al located in the cavity of a watertight module connected, on the one hand, to said thermostatic valve and, on the other hand, to said electrolyte circulation device;
- a stock of anhydrous sodium hydroxide, said electrochemical unit and said stock of anhydrous sodium hydroxide being located in said second, reservoir-forming chamber.

9. Electric propulsion cell according to claim 8, **characterised in that** said stock of anhydrous sodium hydroxide is composed of a mixture of micro-pearls of anhydrous sodium hydroxide and stannates in powder form, placed as a loose charge in said second, reservoir-forming chamber.

10. Electric propulsion cell according to one of claims 1 to 9, **characterised in that** said watertight cell body is formed by an assembly of elements comprising at least:
- a front collar;
- a front base of the main electric cell, said front collar and said front base forming said third chamber;
- a central shell;
- a rear base, said front base, said central shell and said rear base forming said second chamber;
a rear collar, said rear base and said rear collar forming said first chamber.

11. Electric propulsion cell according to claim 10, **characterised in that** said central shell is made from at least a metal alloy which is a good conductor of heat, at least a part of said central shell which is located in the vicinity of said main electric cell forming an exchanger of heat with said aquatic medium so as to form a heat exchanger for at least a diverted flow of activation electrolyte.

12. Electric propulsion cell according to one of claims 10 or 11, **characterised in that** the front collar, the electric cell front base, the central shell, the electric cell rear base and the rear collar are made from a metallic material, the outer surfaces thereof, which are intended to be in contact with the aquatic medium, being provided with a layer of anticorrosion protection obtained by hard anodic oxidation.

13. Electric propulsion cell according to one of claims 10 to 12, **characterised in that** the inner surfaces of the electric cell front base, of the central shell and of the electric cell rear base, which form said second, reservoir-forming chamber, have a chemical nickel coating which protects against corrosion by the anhydrous sodium hydroxide.

14. Electric propulsion cell according to one of claims 11 to 13, **characterised in that** the inner surface of said central shell, except for the part forming the heat exchanger, additionally has a thermally insulating coating in the part forming the activation electrolyte reservoir in order to reduce cooling of the stored activation electrolyte by means of heat exchange with the aquatic medium during the cruising phase.

15. Electric propulsion cell according to one of claims 10 to 14, **characterised in that** said watertight cell body is provided with a double sealing barrier with respect to said aquatic medium:
- a first sealing barrier formed by a sealing gasket between the aquatic medium and the first, and also the third, chamber;
- a second sealing barrier formed by a sealing gasket between the first and the second chambers, and also between the second and the third chambers.

16. Electric propulsion cell according to one of claims 10 to 15, **characterised in that** it additionally comprises:
- a plurality of sensors of the temperature of the flow of activation electrolyte entering, and also leaving, the main electric cell, allowing temperature regulation of the flow of activation electrolyte to be carried out by means of said thermostatic valve;
- a plurality of sensors of the relative pressure of the activation electrolyte in the second, reservoir-forming chamber, and of the activation electrolyte at the inlet of the device for circulation of the activation electrolyte and separation of the waste products, said relative pressure sensors delivering a value of relative pressure with respect to the pressure outside the watertight cell body;
- a plurality of contacts: closure contact for the valve for admission of water from the aquatic medium, opening contact for the valve for admission of water to the watertight cell body.

17. Electric propulsion cell according to one of claims 10 to 16, **characterised in that** the front collar, central shell and rear collar have a cross-section substantially in the shape of a cylinder of revolution.

18. Electric propulsion cell according to claim 17, **characterised in that** the front collar and the rear collar have distal ends that are open with respect to the cell front base and the cell rear base, respectively, so that said electric propulsion cell is, on the one hand, in the form of an independent module storable as a substantially inert component with its charge of stock of anhydrous sodium hydroxide when the electric propulsion cell is not mounted in the craft and, on the other hand, in the form of an element directly integrated into the body of the craft, the distal end of said front collar being mechanically fixed to and electrically coupled to an active part of the craft and the distal end of the rear collar being mechanically fixed to and electrically coupled to the rear propulsive and control part of the craft so as to form an electric propulsion cell which is activatable on entry of the craft into the water.

19. Use of an electric propulsion cell for craft in an aquatic medium, in accordance with one of claims 1 to 18, for the supply, propulsion and control of a craft such as a torpedo, a reconnaissance submarine or a surface craft.

## Patentansprüche

1. Elektrische Propulsionszelle einer Einrichtung in einem wässrigen Medium, **dadurch gekennzeichnet, dass** diese in zumindest einem wasserdichten Zellkörper enthält:
- eine erste Kammer, die eine Aufnahme für eine elektrische Hilfszelle und ein Steuermodul der elektrischen Propulsionszelle bildet;
- eine zweite Kammer, die eine Aufnahme für eine elektrische Hauptzelle vom elektrochemischen Typ bildet, welche zweite Kammer mit Mitteln zum gesteuerten Einlaß und zur Strömungsregelung des wässrigen Mediums in der zweiten Kammer versehen ist, welche auf einen Befehl zum Einlaß des wässrigen Mediums einen Vorrat zur Bildung eines Elektrolyts zur Aktivierung der elektrischen Hauptzelle bildet;
- eine dritte Kammer, die eine Aufnahme bildet für ein Zündmodul zum Einlaß durch Ansaugung des wässrigen Mediums und des Rückstoßes durch Ausstoß der Abflüsse der chemischen Reaktion der Hauptzelle in dem wässrigen Medium jeweils durch ein Einlaßventil und durch ein Auslaßventil, die in der dritten Kammer angeordnet sind, welches Steuermodul der elektrischen Propulsionszelle eine Aktivierung der elektrischen Hilfszelle zur zeitweisen Erzeugung elektrischer Energie während einer Startphase der Einrichtung im wässrigen Mediums und die Aktivierung des Einlasses durch Ansaugen des wässrigen Mediums und des Rückstoßes durch Ausstoß der Abströmung zur Erzeugung elektrischer Energie von der elektrischen Hauptzelle während einer Fahrtphase ermöglicht.

2. Elektrische Propulsionszelle gemäß Anspruch 1, **dadurch gekennzeichnet, dass** die elektrische Hilfszelle und Hauptzelle aufeinanderfolgend durch das Steuermodul der elektrischen Propulsionszelle gesteuert werden und durch ein Netz zur Verteilung der elektrischen Haupt- bzw. Sekundärenergie verbunden sind.

3. Elektrische Propulsionszelle gemäß einem der Ansprüche 1 oder 2, **dadurch gekennzeichnet, dass** die elektrische Hilfszelle gebildet wird durch eine Anordnung thermischer Zellen, die durch einen pyrotechnischen Zünder gezündet werden.

4. Elektrische Propulsionszelle gemäß einem der Ansprüche 1 bis 3, **dadurch gekennzeichnet, dass** die Mittel zum gesteuerten Einlaß und zur Strömungsregelung des wässrigen Mediums in die zweite Kammer zumindest umfassen:
- eine Motorpumpen-Gruppe, deren Ansaugdüse mit dem Einlaßventil für das wässrige Medium verbunden ist und deren Auslaßdüse das angesaugte wässrige Medium unmittelbar in die zweite Kammer leitet, die den Vorrat bildet, zum Bilden des Aktivierungs-Elektrolyts und zum Eintauchen der elektrischen Hauptzelle darin;
- ein Thermostat-Ventil, das an der elektrischen Hauptzelle angebracht ist, welches Thermostat-Ventil eine Regelung des Einlasses des Aktivierungs-Elektrolyts in die Hauptzelle zum Zünden der Aktivierung der elektrischen Hauptzelle durch eine elektrochemische Reaktion ermöglicht;
- eine Einrichtung zur Zirkulation des Aktivierungs-Elektrolyts und zur Trennung der Abflüsse, welche Einrichtung zur Zirkulation und zur Trennung eine Einlaßdüse umfaßt, die mit einem inneren Hohlraum der elektrischen Hauptzelle verbunden ist, der das Aktivierungs-Elektrolyt enthält, sowie eine erste Auslaßdüse, die in der Nähe der Einlaßdüse der Motorpumpe angeordnet ist, und eine zweite Auslaßdüse für die Abflüsse, die mit dem Rückstoßventil verbunden ist, das in der dritten Kammer angeordnet ist.

5. Elektrische Propulsionszelle gemäß Anspruch 4, **dadurch gekennzeichnet, dass** die zweite Auslaßdüse der Zirkulations- und Trenneinrichtung mit dem Rückstoßventil in der dritten Kammer durch ein Ventil verbunden ist, das in einer ersten Stellung die Abflüsse in Richtung des Rückstoßventils der Abflüsse bei der Zündung der elektrischen Hauptzelle während der Startphase richtet und in einer zweiten Position das Aktivierungs-Elektrolyt in Richtung der Ansaugdüse der Motorpumpe leitet, derart, dass in der elektrischen Hauptzelle während der Fahrtphase ein geschlossener Kreislauf des Aktivierungs-Elektrolyts geschaffen wird.

6. Elektrische Zelle gemäß Anspruch 4 oder 5, **dadurch gekennzeichnet, dass** das Thermostat-Ventil gebildet wird durch ein Dreiwege-Ventil, umfassend:
- einen direkten Fluß des Aktivierungs-Elektrolyts, das aus der zweiten Kammer zur Bildung des Vorrats stammt;
- einen Ableitungsfluß des Aktivierungs-Elektrolyts, der einen Wärmetauscher durchläuft, welcher Ableitungsfluß durch den Wärmetauscher im wesentlichen auf einer konstanten Temperatur gehalten wird, wobei das Thermostat-Ventil aufgrund des direkten Flusses und des Ableitungsflusses mit im wesentlichen konstanter Temperatur, die als Soll-Temperatur dient, einen temperierten Fluß des Elektrolyts zur Aktivierung mit im wesentlichen konstanter Temperatur zu dem inneren Hohlraum der elektrischen Hauptzelle abgibt.

7. Elektrische Propulsionszelle gemäß einem der Ansprüche 1 bis 6, **dadurch gekennzeichnet, dass** die elektrische Hauptzelle vom elektrochemischen Typ eine AgO-Al-Zelle ist.

8. Elektrische Propulsionszelle gemäß einem der Ansprüche 4 und 7, **dadurch gekennzeichnet, dass** die elektrische Hauptzelle vom elektro-chemischen Typ gebildet wird durch:
- einen elektrochemischen Block, der gebildet wird durch elektrochemische AgO-Al-Elemente, die in einem Hohlraum eines wasserdichten Moduls angeordnet sind und einerseits mit dem Thermostat-Ventil und andererseits mit der Zirkulationseinrichtung des Elektrolyts verbunden sind;
- einen Vorrat von wasserfreiem Natron, wobei der elektro-chemische Block und der Vorrat von wasserfreiem Natron in der zweiten Kammer zur Bildung des Vorrats angeordnet sind.

9. Elektrische Propulsionszelle gemäß Anspruch 8, **dadurch gekennzeichnet, dass** der Vorrat von wasserfreiem Natron gebildet wird durch eine Mischung aus Mikroperlen von wasserfreiem Natron und puderförmigem Stannat gebildet wird, die lose in der zweiten Kammer zur Bildung des Vorrats enthalten sind.

10. Elektrische Propulsionszelle gemäß einem der Ansprüche 1 bis 9, **dadurch gekennzeichnet, dass** der wasserdichte Zellkörper gebildet wird durch eine Anordnung von Bauteilen, umfassend zumindest:
- eine vordere Zwinge;
- einen vorderen Boden der elektrischen Hauptzelle, welche vordere Zwinge und welcher vordere Boden die dritte Kammer bilden;
- einen zentralen Rumpf;
- einen hinteren Boden, wobei der vordere Boden, der zentrale Rumpf und der hintere Boden die zweite Kammer bilden;
- eine hintere Zwinge, wobei der hintere Boden und die hintere Zwinge die erste Kammer bilden.

11. Elektrische Propulsionszelle gemäß Anspruch 10, **dadurch gekennzeichnet, dass** der zentrale Rumpf zumindest aus einer gut thermisch leitenden Metalllegierung gebildet wird, wobei zumindest ein Teil des zentralen Rumpfes, der in der Nähe der elektrischen Hauptzelle angeordnet ist, einen Wärmetauscher mit dem wässrigen Medium bildet, zur Bildung eines Wärmetauschers zumindest für den Ableitungsfluß des Aktivierungs-Elektrolyts.

12. Elektrische Propulsionszelle gemäß einem der Ansprüche 10 oder 11, **dadurch gekennzeichnet, dass** die vordere Zwinge, der vordere Boden der elektrischen Zelle, der zentrale Rumpf, der hintere Boden der elektrischen Zelle und die hintere Zwinge aus einem Metall-Material gebildet werden, und dass die Außenfläche der letzteren, die dazu bestimmt ist, in Kontakt mit dem wässrigen Medium zu kommen, mit einer antikorrosiven Schutzschicht versehen ist, die durch Hart-Anodenoxidation gebildet wird.

13. Elektrische Propulsionszelle gemäß einem der Ansprüche 10 bis 12, **dadurch gekennzeichnet, dass** die Innenseite des vorderen Bodens der elektrischen Zelle, des zentralen Rumpfes und des hinteren Bodens der elektrischen Zelle, die die zweite Kammer bilden, einen Vorrat bilden, der mit einem chemischen Nickel-Antikorrosionsschicht zum Schutz gegen das wasserfreie Natron versehen ist.

14. Elektrische Propulsionszelle gemäß einem der Ansprüche 11 bis 13, **dadurch gekennzeichnet, dass** die Innenseite des zentralen Rumpfes außerhalb des Teils zur Bildung des Wärmetauschers unter anderem eine thermisch isolierende Auskleidung auf Höhe des Teils trägt, der mit dem Vorrat des Aktivierungs-Elektrolyts versehen ist, zur Reduktion der Abkühlung des Aktivierungs-Elektrolyts, das zum Wärmeaustausch mit dem wässrigen Medium während der Fahrtphase vorgehalten wird.

15. Elektrische Propulsionszelle gemäß einem der Ansprüche 10 bis 14, **dadurch gekennzeichnet, dass** der wasserdichte Zellkörper mit einer doppelten Flüssigkeitsbarriere gegen das wässrige Medium versehen ist, umfassend:
- eine erste Dichtungsbarriere, die durch eine Flüssigkeitsdichtung zwischen dem wässrigen Medium und der ersten beziehungsweise der dritten Kammer gebildet wird;
- und eine zweite Dichtungsbarriere, die durch eine Flüssigkeitsdichtung zwischen der ersten und der zweiten Kammer beziehungsweise der zweiten und der dritten Kammer gebildet wird.

16. Elektrische Propulsionszelle gemäß einem der Ansprüche 10 bis 15, **dadurch gekennzeichnet, dass** diese ferner umfaßt:
- eine Anzahl von Temperaturmeßfühlern für den Strom des Aktivierungselektrolyts, der in die elektrische Hauptzelle eintritt bzw. aus dieser austritt, zur Regelung der Temperatur des Stroms des Aktivierungselektrolyts durch das Thermostat-Ventil;
- eine Anzahl von Fühlern zur Messung der relativen Drücke des Aktivierungselektrolyts in der zweiten Kammer, die den Vorrat bildet, und des Aktivierungselektrolyts am Einlaß der Einrichtung zur Zirkulation des Aktivierungselektrolyts und zur Trennung der Abflüsse, welche Druckmeßfühler einen relativen Druckwert gegenüber dem Außendruck des wasserdichten Zellkörpers liefern;
- eine Anzahl von Kontakten, einem flüssigkeitsdichten Kontakt des Wasser-Einlaßventils des wässrigen Mediums, und einem Öffnungskontakt des Wasser-Öffnungsventils des wasserdichten Zellkörpers.

17. Elektrische Propulsionszelle gemäß einem der Ansprüche 10 bis 16, **dadurch gekennzeichnet, dass** die vordere Zwinge, der zentrale Rumpf und die hintere Zwinge einen im wesentlichen drehzylindrischen Abschnitt bilden.

18. Elektrische Propulsionszelle gemäß Anspruch 17, **dadurch gekennzeichnet, dass** die vordere Zwinge und die hintere Zwinge ein entferntes Ende aufweisen, das gegenüber dem vorderen bzw. hinteren Boden der Zelle offen ist, derart, dass die elektrische Propulsionszelle einerseits in Form eines unabhängigen Moduls gemäß einer Komponente lagerbar ist, die bezüglich ihres Vorrats von wasserfreiem Natron inaktiv ist, während die elektrische Propulsionszelle nicht in die Einrichtung eingebaut ist, und andererseits in Form eines Elements, das unmittelbar in den Körper der Einrichtung integriert ist, wobei das entfernte Ende der vorderen Zwinge mit einem aktiven Teil der Einrichtung mechanisch verbunden und elektrisch gekoppelt ist und das entfernte Ende der hinteren Zwinge mit einem hinteren Antriebs- und Steuerteil der Einrichtung mechanisch gekoppelt und elektrisch verbunden ist, zur Bildung einer elektrischen Propulsionszelle, die durch Eindringen von Wasser in die Einrichtung aktivierbar ist.

19. Verwendung einer elektrischen Propulsionszelle für eine Einrichtung in einem wässrigen Medium gemäß einem der Ansprüche 1 bis 18 zur Versorgung, zum Antrieb und zur Steuerung einer Einrichtung wie etwa eines Torpedos, eines Unterseeboots zur Aufklärung oder einer Schwimmeinrichtung.
